Europäisches Patentamt

European Patent Office

Office européen des brevets

(11) Publication number : **0 500 307 A2**

# (12) EUROPEAN PATENT APPLICATION

(21) Application number : 92301299.1

(22) Date of filing : 18.02.92

(51) Int. Cl.$^5$ : **G11B 20/10, G11B 20/18**

(30) Priority : **19.02.91 JP 24422/91**

(43) Date of publication of application :
**26.08.92 Bulletin 92/35**

(84) Designated Contracting States :
**DE FR GB NL**

(71) Applicant : **MATSUSHITA ELECTRIC INDUSTRIAL CO., LTD.**
**1006, Oaza Kadoma**
**Kadoma-shi, Osaka-fu, 571 (JP)**

(72) Inventor : **Iketani, Akira**
**4-28, Nishizutsumi**
**Hondorihigashi-2-chome, Higashiosaka-shi (JP)**
Inventor : **Nishino, Masakazu**
**4-26, Kamiichi-1-chome**
**Kashiwara-shi (JP)**
Inventor : **Juri, Tatsuro**
**5-8-2804, Tomobuchicho-1-chome**
**Miyakojima-ku, Osaka-shi (JP)**
Inventor : **Ide, Akifumi**
**12-5, Keyakizaka-1-chome**
**Kawanishi-shi (JP)**
Inventor : **Yamamitsu, Chojuro**
**1-131, Suimeidai-1-chome**
**Kawanishi-shi (JP)**

(74) Representative : **Smith, Norman Ian et al**
**F.J. CLEVELAND & COMPANY 40-43 Chancery Lane**
**London WC2A 1JQ (GB)**

(54) **An apparatus for recording digital signals.**

(57)   Means for substituting recording heads (E1, E2, F1, F2) frame after frame so as to eliminate that the data at the same point on a scope are always recorded by the same head. As a result, even if the output of a certain reproducing head is lowered and correct data cannot be reproduced for many hours with respect to that head, a record pattern capable of interpolating those non-reproducible data by using correlation between frames of a video is generated.

FIG. 1

EP 0 500 307 A2

## BACKGROUND OF THE INVENTION

### 1. Field of the Invention

The present invention relates to an apparatus for recording signals which is capable of suppressing degradation of reproduced picture quality to the minimum even in a non-reproducible state of a small number of heads for comparatively many hours caused by fouling of heads and the like generated in a digital VTR and the like.

### 2. Description of the Relataed Art

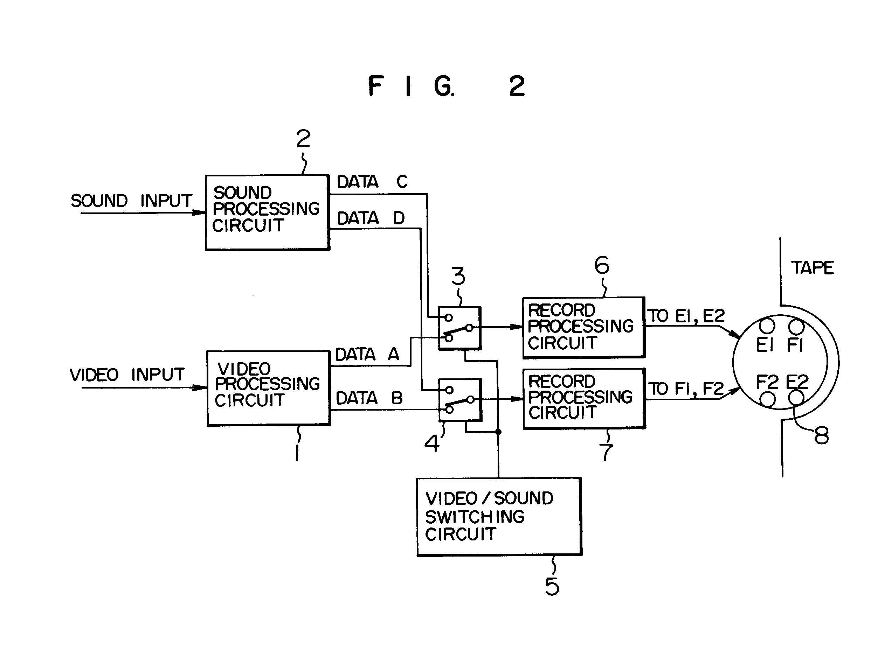

Fig. 2 shows a block diagram of a conventional digital VTR. In Fig. 2, a video signal processing circuit 1 formats inputted video data into a state suitable for recording. For example, highly efficient coding processing aiming at lengthening of recording hours by reducing redundancy of picture image so as to extract only information required substantially for having a video reappear and reduce data quantity to be recorded, error correction processing for providing additional information for correcting errors at time of reproduction and channel split processing for splitting those data into a plurality of channels are included. On the other hand, in Fig. 2, a audio signal processing circuit 2 formats inputted audio data (usually two channels L and R) into a state suitable for recording. For example, error correction processing providing additional information for correcting errors at time of reproduction and channel split processing for splitting these data into a plurality of channels are included.

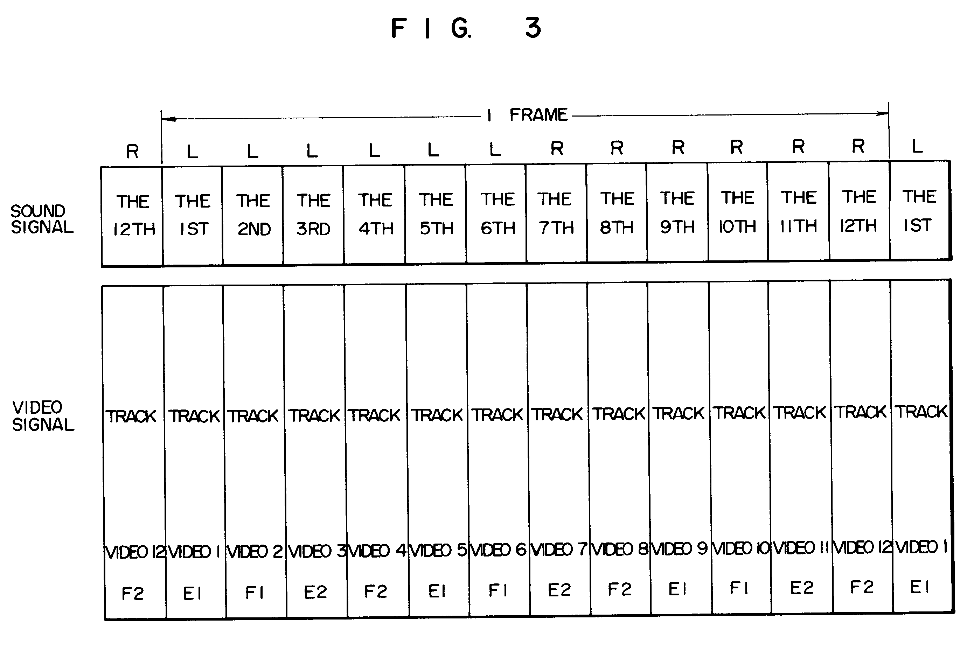

Selecting circuits 3 and 4 switch the output of the video signal processing circuit 1 to and from the output of the audio processing circuit 2 and record a video data area and a audio data area separately from each other on one track on a tape such as illustrated in Fig. 3. A video/audio switching circuit 5 generates a video/audio switching signal for discriminating between a video signal region and an audio signal region together with a track start pulse based on a frame start pulse of a video input. The selecting circuits 3 and 4 perform selecting operation based on the video/audio switching signal, respectively. Fig. 3 shows a case of recording one frame portion of video data and audio on 12 lines of tracks. Symbols E1, E2, F1 and F2 shown in Fig. 3 show which head in Fig. 2 is used for recording, and videos 1 to 12 correspond to a split number in one frame data splitted into 12 sections, respectively. Further, L and R show which channel of the two channels of audio data has been recorded.

Each of record processing circuits 6 and 7 shown in Fig. 2 is composed of what is called a modulation circuit converting data from the selecting circuit 3 or 4 into a data series having a characteristic consistent with a feature of a recording path and a record amplifier. The output of the record processing circuit 6 is sent to the heads E1 and E2 installed at positions apart from each other by 180 degrees on a rotary cylinder 8, and recorded on a tape wrapped around the rotary cylinder at 180 degrees. The output of the record processing circuit 7 is sent to the heads F1 and F2 installed at positions apart by 180 degrees on the rotary cylinder 8, and recorded on a tape wrapped around the rotary cylinder at 180 degrees.

In the case of Fig. 3 for instance, the data at the left corner of the scope are always recorded on a first track by means of the head E1. Similarly, certain data on the scope are recorded at the same position on every 12 tracks. Conversely, when the data thus recorded are reproduced, one point on the scope is always reproduced by means of the same head. In this case, the reproduced output of a particular head falls largely by fouling and the like, and errors increase markedly thereby exceeding the error correction capacity. In this case, the data on the scope corresponding to this head do not reappear almost for certain, and error interpolation using correlation between frames cannot be made. On the other hand, ordinary incorrectable errors caused by for example random noises are substituted with data of an adjacent frame by using of strong correlation between frames. And the resultant picture quality is kept high. Such a non-interpolatable state causes to reproduce a very unsightly picture image, which presents a serious problem to be solved for a digital VTR which trades high picture quality.

## SUMMARY OF THE INVENTION

It is an object of the present invention to provide an apparatus for recording video signals capable of suppressing degradation of reproduced picture quality even when a certain head becomes non-reproducible.

According to the present invention, a head for recording data at the same point on a scope is switched frame after frame. Thus, even if a certain head is brought into a non-reproducible state, the position on the scope of the data recorded by the head varies from frame to frame. Accordingly, the data at a relevant position of an adjacent frame is reproduced by means of another head even when certain data are not reproduced, thus providing correct data ordinarily. As a result, even when a certain head is brought into a non-reproducible state, interpolation between frames becomes feasible, thus making it possible to solve a serious problem that a picture has to be outputted without interpolation as heretofore experienced.

To be more concrete, an apparatus for recording video signals according to the present invention is an apparatus for recording video data in N frames on T lines of tracks by means of a plurality of heads composed of heads each having a positive azimuth angle and heads each having a negative azimuth angle, and includes video blocking means for splitting the video data in N frames into a plurality of video blocks, and switching means for switching the heads for recording the video blocks at every N frames so that the azimuth angle of the head for recording the video block including data at a picture element point A in the ith frame in the N frames shows the same polarity at the azimuth angle of the head for recording the video block including the data at the picture element point A in the (i-l)th frame in the N frames in case T is an odd number, and switching the head so that the azimuth angle of the head for recording the video block including the data at a picture element point B in the ith frame in the N frames shows a reverse polarity to the azimuth angle of the head for recording the video block including the data at the picture element point B in the above-mentioned N frames.

There are included audio blocking means for splitting the audio data during an N frame period of a video into a plurality of audio blocks, and switching means for switching the heads for recording the audio blocks at every N frames so that the azimuth angle of the head for recording the audio block including data at an audio element point A within N frame period of the ith video shows a reverse polarity to the azimuth angle of the head for recording the audio block including the data at the audio element point A in the N frame period of the (i-l)th video when the number of tracks T where the video data of the N frames are recorded is an odd number, and switching the heads so that the azimuth angle of the head for recording the audio block including data at an audio element point B within the N frame period of the ith video shows the same polarity as the azimuth angle of the head for recording the audio block including the data of the audio element point B within the N frames of the (i-l)th video when T is an even number.

BRIEF DESCRIPTION OF THE DRAWINGS

Fig. 1 is a block diagram showing an embodiment of the present invention.

Fig. 2 is a block diagram of a conventional example.

Fig. 3 is a record pattern diagram of a conventional example at time of recording one frame on 12 tracks.

Fig. 4 is a record pattern diagram of the present invention at time of recording one frame on 12 tracks.

Fig. 5 is a record pattern diagram at time of recording one frame on 10 tracks.

Fig. 6 is a record pattern diagram after audio recording succeeding to video recording at time of recording one frame on 10 tracks.

Fig. 7 is a block diagram showing a second embodiment of the present invention.

DESCRIPTION OF THE PREFERRED EMBODIMENT

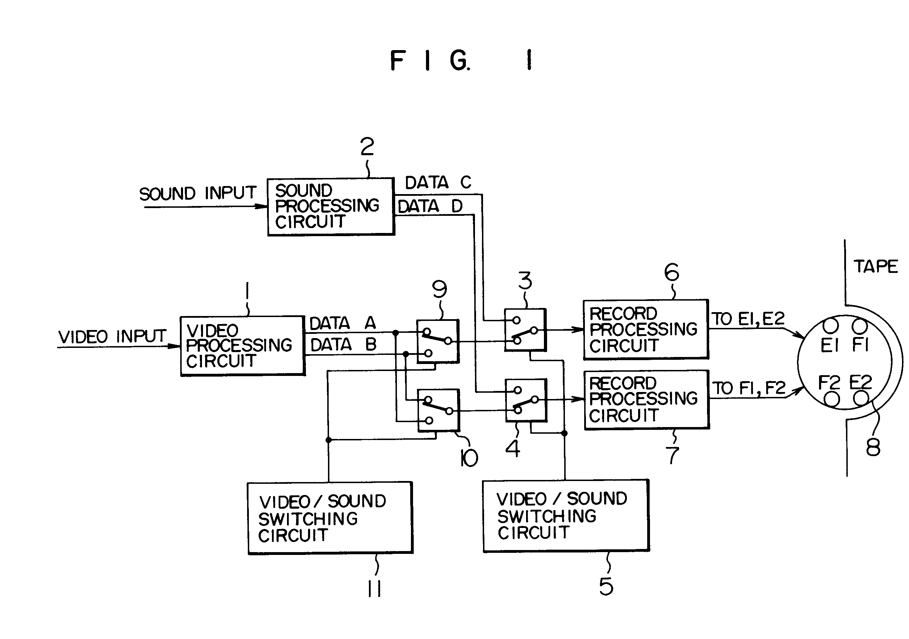

Fig. 1 shows a block diagram of an embodiment of the present invention. In Fig. 1, an audio signal processing circuit 1 formats inputted video data into a state suitable for recording. For example, highly efficient coding processing aiming at lengthening of recording hours by reducing redundancy of a picture image so as to extract only information required substantially for having a video reappear and reduce data quantity to be recorded, error correction processing for providing additional information for correcting errors at time of reproduction and channel split processing for splitting those data into a plurality of channels are included. On the other hand, in Fig. 1, an audio signal processing circuit 2 formats inputted audio data (ordinarily two channels L and R) into a state suitable for recording. For example, error correction processing for providing additional information for correcting errors at time of reproduction and channel split processing for splitting those data into a plurality of channels are included.

An electronic switch 9 receives data A and B of two channels formed by channel split in the video processing circuit 1, and, for example, outputs the inputted data A in case of an even frame and outputs the inputted data B in case of an odd frame. An electronic switch 10 receives the data A and B of two channels formed by channel split in the video processing circuit 1, and, for example, outputs the inputted data B in case of an even frame and outputs the inputted data A in case of an odd frame. A switching control circuit 11 discriminates whether a video signal to be recorded henthforth is an even frame or an odd frame by counting frame start pulses of video input, and generates and outputs a switching signal to the electronic switches 9 and 10. As a result, the data A and B appear at the outputs of the electronic switches 9 and 10 in case of an even frame, and the data B and A appear thereat in case of an odd frame. Since the video processing circuit 1 operates independently of even or odd frame similarly to a conventional case, the positions of the data appearing at the outputs of the electronic switches 9 and 10 vary frame after frame.

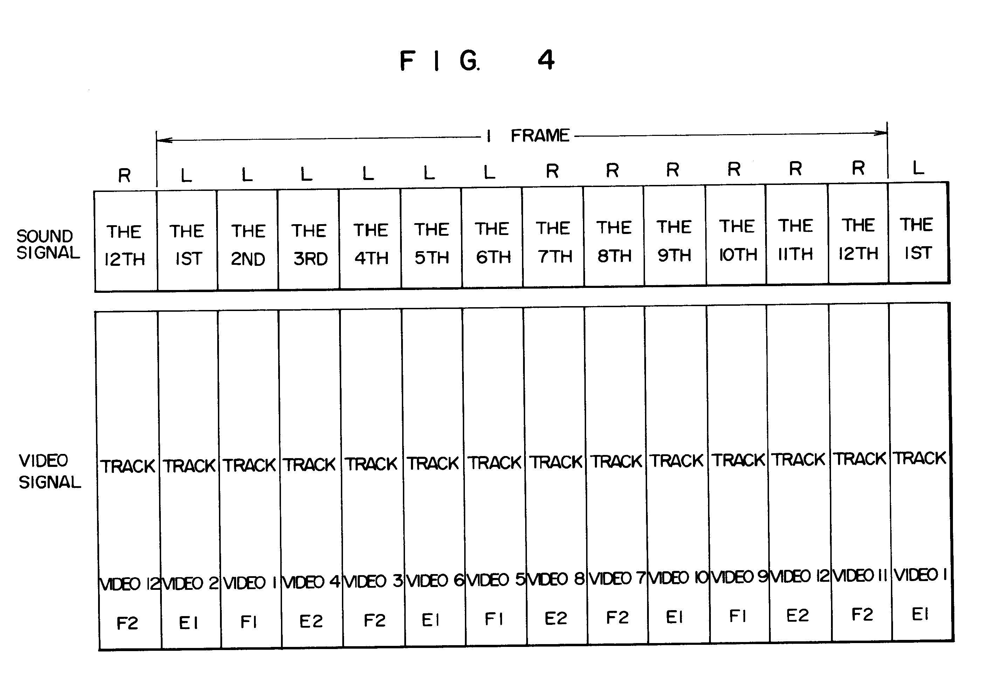

The selecting circuit 3 switches the output of the electronic switch 9 to and from the output of two-channelized data C from the audio processing circuit 2 and the selecting circuit 4 switches the output of the electronic switch 10 to and from the output of two-channelized data D from the audio processing circuit 2, thereby to record a video data area and an audio data area separately on one track on a tape as illustrated in Fig. 4. Fig. 4 shows a case when one frame portion of video data and audio on 12 lines of tracks. E1, E2, F1 and F2 in Fig. 4 show with which head in Fig. 1 recording has been made. Further, L and R show which channel among two channels of audio data is recorded.

The record processing circuits 6 and 7 in Fig. 1 is composed of what is called a modulation circuit for converting the data from the selecting circuits 3 and 4 into data series having characteristics consistent with features of recording paths and a record amplifier. The output of the record processing circuit 6 is sent to the heads E1 and E2 installed at positions apart from each other at 180 degrees on the rotary cylinder 8, and recorded on a tape wrapped around the rotary cylinder at 180 degrees. The output of the record processing circuit 7 is sent to the heads F1 and F2 installed at positions apart from each other by 180 degrees on the rotary cylinder 8 and recorded on a tape wrapped around the rotary cylinder at 180 degrees. Besides, there are a variety of quantity and positions of heads, wrapping angle of a tape and the like, and they are not limited to the above-described example.

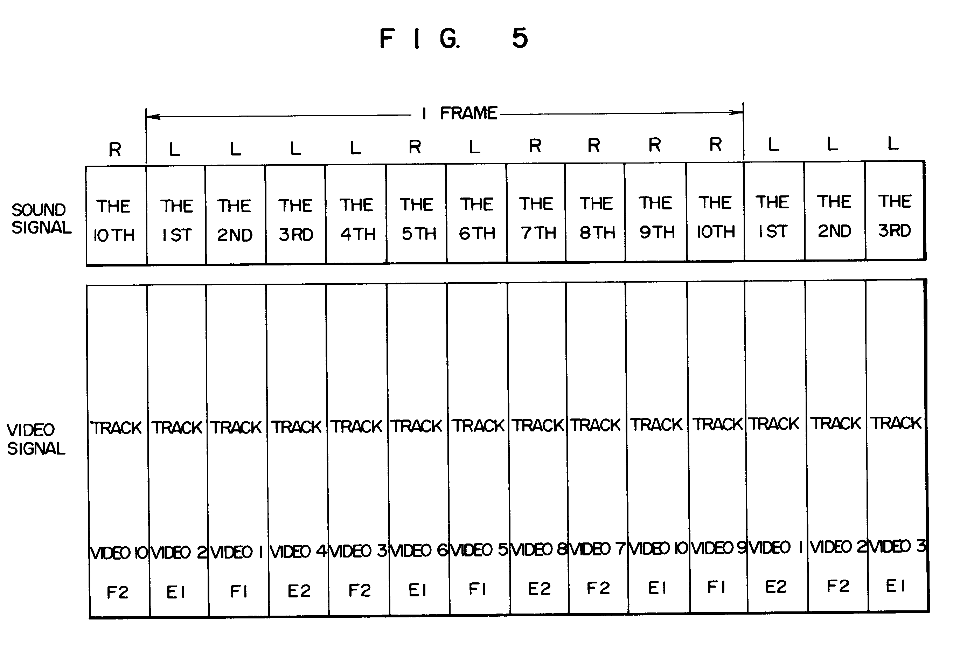

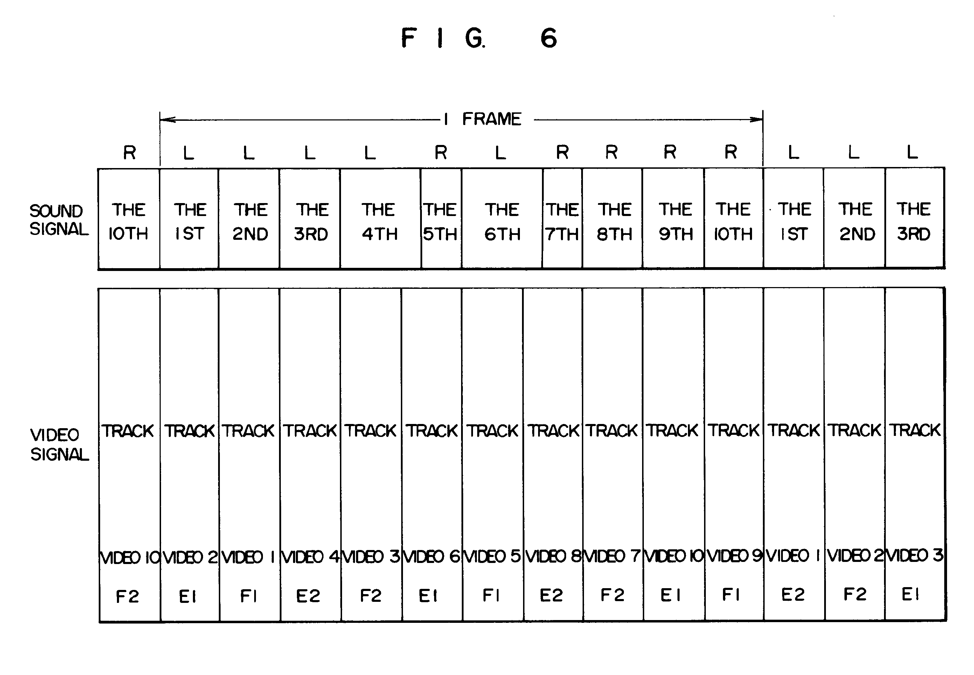

Incidentally, the head is not substituted frame after frame in the present invention with respect to an audio signal. This is because of a fact that the audio signal has very small frame correlation, and there is no meaning in performing interpolation between frames. Furthermore, in case the data in one frame are recorded on 10 lines of tracks, the record pattern appears as shown in Fig. 5 when head substitution is applied also to the audio data. At this time, when only the L channel of audio is rewritten by after-recording succeeding to video recording, the track of the R channel adjacent to L channels becomes narrower considerably than the original track width as shown in Fig. 6 since the width (Hw) of a recording head is usually wider than the width (Tw) of a recording track.

When high density recording is performed as a home digital VTR, the track width is 10 μm or less and the head width is approximately at 14 μm. In this case, the track width of the R channel adjacent to L channels becomes 6 μm, and the error rate is degraded largely in this portion only because the stability of a reproduced signal depends largely on the track width. Two lines of such tracks are generated when the head is substituted with respect to the audio, too. On the other hand, only one line of such a track will suffice when the recording head is not substituted with respect to the audio. As described above, alteration of the head in use from frame to frame is not only meaningless but also detrimental with respect to an audio signal, and hence should not be employed.

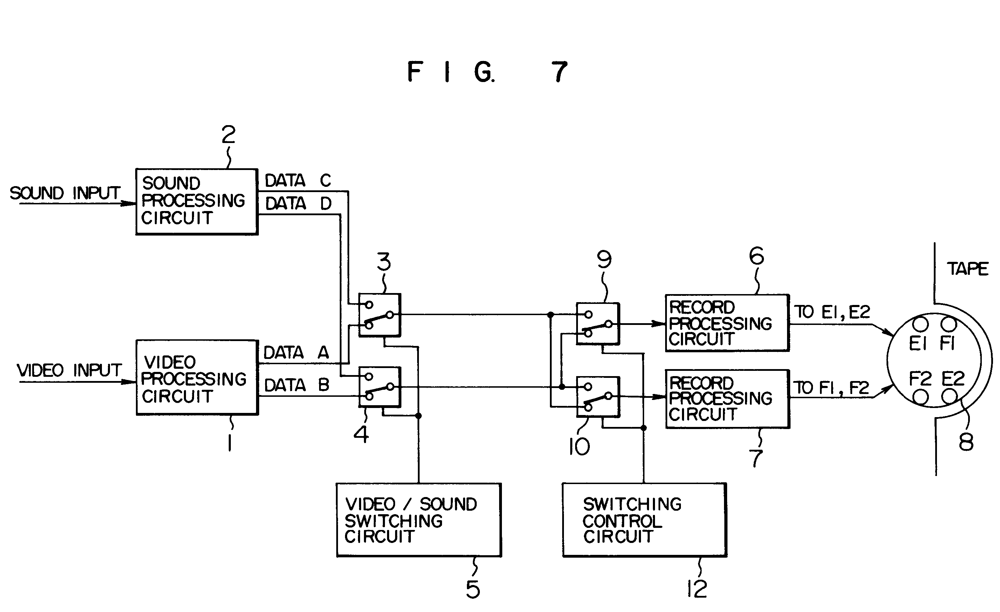

Incidentally, Fig. 1 shows only one structural example of the present invention. In other words, the effect of the present invention can be materialized with other compositions. For example, Fig. 7 also shows an example. The circuit block composing Fig. 7 is almost the same as that shown in Fig. 1, and the difference is that a channel for recording a video signal portion only is switched after video data and audio data are aligned in the unit of track. That is, the electronic switches 9 and 10 shown in Fig. 1 are connected to the outputs of the selecting circuits 3 and 4 of the circuit shown in Fig. 2, and the outputs of the electronic switches 9 and 10 are sent to the record processing circuits 6 and 7 shown in Fig. 1, respectively. As a result, a series formatted as shown in Fig. 3 appears at the output of the selecting circuit shown in fig. 7, and a record series formatted as shown in Fig. 4 which is the final object of the present invention appears at the output of the electronic switches shown in Fig. 7. A switching control circuit 12 controls switching of the channel on the video data portion only in accordance with the output of a video/audio switching circuit 5. In such a manner, the same result as that in Fig. 1 is provided in Fig. 7, and moreover, the complexity of the circuit remains almost the same.

Further, the present invention is not limited to the case described in the present embodiment with respect to the installed positions and quantity of the heads, the wrapping angle of the tape and the like as shown previously. For instance, when there is only one set of heads, either E1 and F1 or E2 or F2 and the rotational speed of the cylinder and the tape feed rate are two times as high in Fig. 1 and Fig. 7, the record format shown in Fig. 4 can be realized with exactly the same circuit composition as that of the present embodiment. In this case, it is found that a desired format is obtainable by providing E only by eliminating discrimination of the heads E1 and E2 and F only by eliminating discrimination of the heads F1 and F2 in Fig. 4. The above can also be realized similarly in case of one channel recording.

As described above, according to the present invention, even if a state that the output of a certain reproducing head is lowered and correct data cannot be reproduced is continued for many hours, it is possible to make those inferior data inconspicuous visually by using interpolation between frames. As a result, it is possible to delete the state of interpolation impossibility caused by fouling of the head and the like which has been a problem, thereby to always produce stable high picture quality. Accordingly, the present invention is very effective in practical use of an appliance of high picture quality such as a digital VTR.

**Claims**

1. An apparatus for recording video data in N frames on T lines of tracks by means of a plurality of heads (E1, E2, F1, F2) composed of heads each having a positive azimuth angle and heads each having a negative azimuth angle, comprising:

   video blocking means (1) for splitting said video data in N frames into a plurality of video blocks; and

   switching means (9, 10) for switching said heads (E1, E2, F1, F2) for recording said video blocks at every N frames so that the azimuth angle of said head for recording said video block including data at a picture element point A in the ith frame in said N frames shows the same polarity as the azimuth angle of said head for recording said video block including the data at said picture element point A in the (i-l)th frame in said N frames when T is an odd number, and switching said heads (E1, E2, F1, F2) so that the azimuth angle of said head for recording said video block including data at a picture element point B in the ith frame in said N frames shows a reverse polarity to the azimuth angle of said head for recording said video block including the data at said picture element point B in the (i-l)th frame in said N frames.

2. An apparatus according to Claim 1, wherein:
    audio blocking means (2) for splitting audio data during an N frame period of a video into a plurality of audio blocks is provided; and
    switching means (3, 4) switch said heads (E1, E2, F1, F2) for recording said audio blocks at every N frames so that the azimuth angle of said head for recording said audio block including data at an audio element point A in the N frame period of the ith video shows a reverse polarity to the azimuth angle of said head for recording said audio block including the data at an audio element point A in the N frame period of the ith video shows a reverse polarity to the azimuth angle of said head for recording said audio block including the data at said audio element point A in the N frame period of the (i-l)th video when the number of tracks T on which the video data of said N frames are recorded is an odd number, and switches said heads (E1, E2, F1, F2) so that the azimuth angle of said head for recording said audio block including the data at an audio element point B in the N frame period of the ith video shows the same polarity as the azimuth angle of said head for recording said audio block including the data at said audio element point B in the N frames of the (i-l)th video.

# F I G. I

F I G. 2

EP 0 500 307 A2

# F I G. 3

|  | R | L | L | L | L | L | L | R | R | R | R | R | R | L |
|---|---|---|---|---|---|---|---|---|---|---|---|---|---|---|
| SOUND SIGNAL | THE 12TH | THE 1ST | THE 2ND | THE 3RD | THE 4TH | THE 5TH | THE 6TH | THE 7TH | THE 8TH | THE 9TH | THE 10TH | THE 11TH | THE 12TH | THE 1ST |

| VIDEO SIGNAL | TRACK VIDEO 12 F2 | TRACK VIDEO 1 E1 | TRACK VIDEO 2 F1 | TRACK VIDEO 3 E2 | TRACK VIDEO 4 F2 | TRACK VIDEO 5 E1 | TRACK VIDEO 6 F1 | TRACK VIDEO 7 E2 | TRACK VIDEO 8 F2 | TRACK VIDEO 9 E1 | TRACK VIDEO 10 F1 | TRACK VIDEO 11 E2 | TRACK VIDEO 12 F2 | TRACK VIDEO 1 E1 |

EP 0 500 307 A2

# F I G. 4

EP 0 500 307 A2

# FIG. 5

| | R | L | L | L | L | R | L | R | R | R | R | L | L | L |
|---|---|---|---|---|---|---|---|---|---|---|---|---|---|---|
| SOUND SIGNAL | THE 10TH | THE 1ST | THE 2ND | THE 3RD | THE 4TH | THE 5TH | THE 6TH | THE 7TH | THE 8TH | THE 9TH | THE 10TH | THE 1ST | THE 2ND | THE 3RD |
| VIDEO SIGNAL | TRACK | TRACK | TRACK | TRACK | TRACK | TRACK | TRACK | TRACK | TRACK | TRACK | TRACK | TRACK | TRACK | TRACK |
| | VIDEO 10 | VIDEO 2 | VIDEO 1 | VIDEO 4 | VIDEO 3 | VIDEO 6 | VIDEO 5 | VIDEO 8 | VIDEO 7 | VIDEO 10 | VIDEO 9 | VIDEO 1 | VIDEO 2 | VIDEO 3 |
| | F2 | E1 | F1 | E2 | F2 | E1 | F1 | E2 | F2 | E1 | F1 | E2 | F2 | E1 |

1 FRAME

EP 0 500 307 A2

|—————————————————— I FRAME ——————————————————|

| | R | L | L | L | L | R | L | R | R | R | R | L | L | L |
|---|---|---|---|---|---|---|---|---|---|---|---|---|---|---|
| SOUND SIGNAL | THE 10TH | THE 1ST | THE 2ND | THE 3RD | THE 4TH | THE 5TH | THE 6TH | THE 7TH | THE 8TH | THE 9TH | THE 10TH | THE 1ST | THE 2ND | THE 3RD |
| VIDEO SIGNAL | TRACK | TRACK | TRACK | TRACK | TRACK | TRACK | TRACK | TRACK | TRACK | TRACK | TRACK | TRACK | TRACK | TRACK |
| | VIDEO 10 F2 | VIDEO 2 E1 | VIDEO 1 F1 | VIDEO 4 E2 | VIDEO 3 F2 | VIDEO 6 E1 | VIDEO 5 F1 | VIDEO 8 E2 | VIDEO 7 F2 | VIDEO 10 E1 | VIDEO 9 F1 | VIDEO 1 E2 | VIDEO 2 F2 | VIDEO 3 E1 |

# F I G. 7

SOUND INPUT → SOUND PROCESSING CIRCUIT (2) — DATA C, DATA D

VIDEO INPUT → VIDEO PROCESSING CIRCUIT (1) — DATA A, DATA B

3

4

VIDEO / SOUND SWITCHING CIRCUIT (5)

9

10

SWITCHING CONTROL CIRCUIT (12)

RECORD PROCESSING CIRCUIT (6) — TO E1, E2

RECORD PROCESSING CIRCUIT (7) — TO F1, F2

TAPE

E1  F1
F2  E2

8